# EUROPEAN PATENT SPECIFICATION

(11) **EP 1 273 414 B1**
(45) Date of publication and mention of the grant of the patent: **04.01.2006**
(21) Application number: 02013230.4
(22) Date of filing: 17.06.2002
(51) Int. Cl.: B29B 17/02, C08J 11/06, C22B 1/00, C22B 3/00, C22B 7/00

(54) **Method for recycling compact disks**
Verfahren zur Wiederverwendung von CD-Platten
Procédé pour le recyclage de disques compacts

(30) Priority: 04.07.2001 CN 01122553
(43) Date of publication of application: 08.01.2003
(73) Proprietor: Chen, Cheng-Shu, Taichung Hsien (TW)
(72) Inventor: Chen, Cheng-Shu, Taichung Hsien (TW)
(74) Representative: Viering, Jentschura & Partner

(56) References cited:
- DE-A- 4 306 348
- DE-A- 4 324 830
- US-A- 4 828 661
- US-A- 5 151 452
- PATENT ABSTRACTS OF JAPAN vol. 1999, no. 05, 31 May 1999 (1999-05-31) & JP 11 029828 A (SONY CORP), 2 February 1999 (1999-02-02)

## Description

### 1. Field of the Invention

The present invention relates to a method for recycling compact disks, and more particularly to a method for recycling compact disks to separate the compact disks into separate plastic and metal resources for reprocessing.

### 2. Description of Related Art

Compact disks have become a major recording medium in the recording industry. To a significant extent compact disks have replaced the audiotapes or videotapes because the compact disks have a huge memory storage capacity, retain the stored recording longer and provide better quality of sound and picture than the conventional magnetic recording media. Each compact disk is composed of a hard plastic disk and a metal recording layer of aurum, silver or aluminum formed on one side of the plastic disk and is cheap to produce. Although the compact disks retain the stored recording longer than the conventional inagnetic recording media, compact disks are easily damaged when the metal layer is scratched, abraded or otherwise damaged to cause gaps or breaks in the memory area on the metal layer.

As compact disks have become more popular and more common, more and more compact disks are inevitably discarded. The discarded compact disks pose a serious environmental problem that is tough to deal with. If the compact disks are discarded without any treatment, the heavy metal in the metal layer leaches into the soil and the water causing pollution to our environment and a potentially serious health hazard. Furthermore, since the plastic and metal in the compact disks are reusable, discarding the compact disks without any treatment is a waste of resources.

DE 43 24 830 A1 describes a process for recycling plastic found in plastic-coated materials such as compact disks. The process comprises treating crushed plastic-coated material in a concentrated sulphuric acid bath at an elevated temperature. This step is carried out to dissolve metals present in the plastic coated material, thereby separating metallic material from plastic material. Thereafter, the plastic material is rinsed and dried.

In addition, US 4,828,661 discloses a process for recovering metals from metal/plastic waste. The waste is first heated in a heat transfer medium bath to melt away plastic material, leaving behind unmelted metal, which is then mechanically removed from the bath. Subsequently, the metal is dissolved in etching and wash solutions. The dissolved metals are recovered by ion exchange or electrolysis.

The present invention provides a method for recycling compact disks to obviate the aforementioned problems.

The main objective of the invention is to provide a method for recycling compact disks to separate the materials used in compact disks into reusable plastic and metal. This objective is solved by the method as defined in claim 1.

Other objects, advantages and features of the invention will become more apparent from the following detailed description when taken in conjunction with the accompanying drawings.

### IN THE DRAWINGS

Fig. I is a schematic diagram of the method for recycling compact disks in accordance with the present invention.

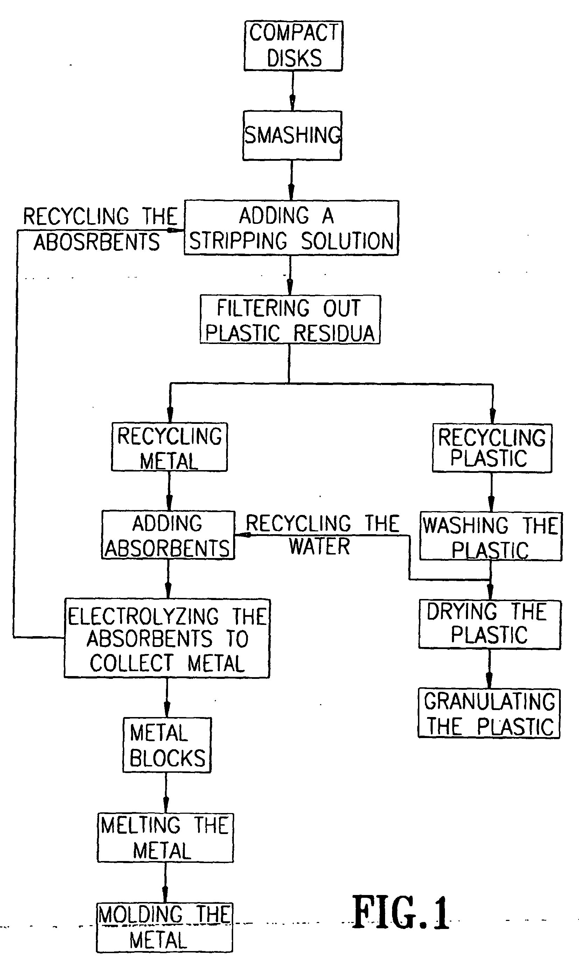

With reference to Fig. 1, the method for recycling compact disks composed of a plastic disk and metal in accordance with the present invention comprises the following acts.

Smashing: smashing the compact disks into pieces.

Adding a stripping solution: the pieces of compact disks are put into a container of stripping solution (reagents for stripping the metal layer from the compact disks) to dissolve the metal in the metal layer from the compact disks into the stripping solution. Residua of the compact disks are plastic pieces suspended in an upper layer of the stripping solution.

Filtering out the plastic residua: the stripping solution is filtered to separate the plastic pieces from the stripping solution that contains the metal.

Recycling the metal: the stripping solution containing the metal is mixed with absorbents to undergo an ion exchange reaction to separate the metal from the stripping solution. Then the absorbents are electrolyzed to coat the metal material on a negative electrode to obtain a pure metal. The pure metal is collected, melted and molded into a block of metal. Additionally, the stripping solution after undergoing ion exchange reaction is poured into the container to dissolve the material from additional pieces of the compact disks.

Recycling the plastic: the plastic pieces are washed with water, dried and then granulated into plastic particles. The water used to wash the pieces of plastic also contains a trace of metal. Therefore, the water is mixed with the absorbents for recycling the metal and then reused.

Based on the foregoing description of the method for recycling compact disks in accordance with the present invention, the following advantages exist.
1. The compact disks are recycled to reduce amount of trash and prevent metal in the compact disks from leaching into and polluting the soil and water in out environment.
2. The whole compact disk is recycled into reusable metal and the plastic. All the elements of the compact disks are recovered for reuse.
3. The stripping solution and water are also recycled to prevent wasting resources and causing other pollution.

## Claims

1. A method for recycling compact disks composed of plastic base plates and metal material, the method comprising following acts:
smashing: smashing the compact disks into pieces;
adding a stripping solution: mixing the pieces of compact disks with a stripping solution to dissolve the metal from the pieces of compact disks into the stripping solution, wherein residua of the compact disks are plastic pieces;
filtering out the plastic residua: filtering the stripping solution to separate the plastic pieces and stripping solution containing metal;
recycling the metal: mixing the stripping solution containing metal with absorbents to undergo an ion exchange reaction to separate the metal from the stripping solution, the absorbents containing metal are electrolyzed to coat solid metal on a negative electrode; and
recycling the plastic: washing the plastic pieces with water, drying and granulating the plastic material into particles, wherein the waste water from washing the plastic pieces is mixed with the absorbents for recycling the metal and then reused.

2. The method for recycling compact disks as claimed in claim 1, wherein the solidified metal is collected, melted and molded into a metal block; and
the stripping solution is reused to remove metal from additional pieces of compact disks.

## Patentansprüche

1. Verfahren zur Wiederverwertung von Compactdisks, die aus Plastikgrundplatten und Metallmaterial bestehen, wobei das Verfahren folgende Vorgänge umfaßt:
Zerschlagen: Zerschlagen der Compactdisks in Stücke;
Zufügen einer Abziehlösung: Vermischen der Stücke der Compactdisks mit einer Abziehlösung, um das Metall aus den Stücken der Compactdisks in der Abziehlösung zu lösen, wobei die Rückstände der Compactdisks Plastikstücke sind;
Herausfiltern der Plastikstücke: Filtrieren der Abziehlösung, um die Plastikstücke und die Metall enthaltende Abziehlösung voneinander zu trennen;
Wiederverwerten des Metalls: Mischen der Metall enthaltenden Abziehlösung mit Absorbentien, um eine Ionenaustauschreaktion zur Trennung des Metalls von der Abziehlösung auszulösen, die Metall enthaltenden Absorbentien werden elektrolysiert, um eine negative Elektrode mit festem Metall zu beschichten; und
Wiederverwerten des Plastiks: Waschen der Plastikstücke mit Wasser, Trocknen und Granulieren des Plastikmaterials in Partikel,
wobei das Abwasser des Waschens der Plastikstücke mit den Absorbentien zur Wiederverwertung des Metalls gemischt wird und dann erneut verwendet wird.

2. Verfahren zur Wiederverwertung von Compactdisks wie in Anspruch 1 beansprucht, wobei das verfestigte Metall gesammelt, geschmolzen und zu einem Metallblock geformt wird; und die Abziehlösung wiederverwendet wird, um Metall von weiteren Stücken von Compactdisks zu entfernen.

## Revendications

1. Procédé de recyclage de disques compacts composés de plaques de base en plastique et de matière métallique, le procédé comprenant les actions suivantes :
écrasement : écraser les disques compacts en morceaux ;
ajout d'une solution de démétallisation : mélanger les morceaux de disques compacts avec une solution de démétallisation pour dissoudre le métal des morceaux de disques compacts dans la solution de démétallisation, les résidus des disques compacts étant des morceaux de plastique ;
filtrage des résidus de plastique : filtrer la solution de démétallisation pour séparer les morceaux de plastique et la solution de démétallisation contenant du métal ;
recyclage du métal : mélanger la solution de démétallisation contenant du métal avec des absorbants pour lui faire subir une réaction d'échange ionique afin de séparer le métal de la solution de démétallisation, les absorbants contenant le métal sont électrolysés pour revêtir le métal solide sur une électrode négative et
recyclage du plastique : laver les morceaux de plastique avec de l'eau, sécher et granuler la matière plastique en particules, dans lequel l'eau résiduaire provenant du lavage des morceaux de plastique étant mélangée avec les absorbants pour recycler le métal puis réutilisée.

2. Procédé de recyclage de disques compacts selon la revendication 1, selon lequel le métal solidifié est collecté, fondu et moulé dans un bloc métallique ; et
la solution de démétallisation est réutilisée pour retirer le métal de morceaux supplémentaires de disques compacts.
